# EUROPEAN PATENT APPLICATION

(11) **EP 3 450 372 A1**
(43) Date of publication of application: **06.03.2019**
(21) Application number: 18190992.0
(22) Date of filing: 27.08.2018
(51) Int. Cl.: B66B 1/46, G10L 15/25

(54) **SPOKEN COMMAND INTERFACE**

(30) Priority: 28.08.2017 US 201762550999 P
(71) Applicant: Otis Elevator Company, Farmington, Connecticut 06032 (US)
(72) Inventor: HSU, Arthur, Farmington, CT Connecticut 06032 (US); FINN, Alan Matthew, East Hartford, CT Connecticut 06108 (US)
(74) Representative: Schmitt-Nilson Schraud Waibel Wohlfrom Patentanwälte Partnerschaft mbB

(57) **Abstract**

Methods, systems, and computer program products for spoken command interface are provided. Aspects include receiving a statement command from a user, wherein the receiving the statement command from the user includes capturing, by a sensor, a series of frames of the user, wherein the series of frames includes lip movements of the user, and determining at least one statement command from the user based on the lip movements of the user. One or more keywords are extracted from the statement command. The one or more keywords are used to determine an elevator command.

## Description

### BACKGROUND

The subject matter disclosed herein generally relates to elevator service and, more particularly, to elevator service utilizing spoken command interface.

Conventionally, passenger interaction with in-building equipment such as an elevator system depends on physical interaction with the elevator controls (e.g., pressing buttons, entering a destination at a kiosk, etc.). As technology has progressed, some elevator systems utilize voice-based interfaces for users to interact with the elevator controls. These voice-based interfaces typically require special hardware and specialized software to process and identify commands from the audio signals from an elevator user. The identification of audio commands can be especially challenging due to ambient noise and noise from other people near the elevator user.

### BRIEF SUMMARY

According to one embodiment, a method is provided. The method includes receiving a statement command from a user, wherein the receiving the statement command from the user includes capturing, by a sensor, a series of frames of the user, wherein the series of frames include lip movements of the user, and determining at least one statement command from the user based on the lip movements of the user. One or more keywords are extracted from the statement command. An elevator command is determined based on the one or more keywords is recognized.

In addition to one or more of the features described above, or as an alternative, further embodiments of the method may include detecting a presence of the user at a location and prompting the user for the statement command for the elevator system, based at least in part on the detecting the presence of the user at the location.

In addition to one or more of the features described above, or as an alternative, further embodiments of the method may include the determining an elevator command based on the one or more extracted keywords includes comparing the one or more keywords to an elevator command database to determine that at least one of the one or more keywords is recognized, and selecting the elevator command from the elevator command database.

In addition to one or more of the features described above, or as an alternative, further embodiments of the method may include presenting the elevator command to the user and receiving an indication from the user.

In addition to one or more of the features described above, or as an alternative, further embodiments of the method may include that the indication from the user is a confirmation of the elevator command and further including providing the elevator command to a controller of the elevator system.

In addition to one or more of the features described above, or as an alternative, further embodiments of the method may include that the indication from the user is a rejection of the elevator command and further including prompting the user for a statement command for the elevator system.

In addition to one or more of the features described above, or as an alternative, further embodiments of the method may include that the prompting the user for a statement command for the elevator system comprises providing one or more example commands to the user.

In addition to one or more of the features described above, or as an alternative, further embodiments of the method may include that the prompting the user for the statement command for the elevator system includes displaying, on an electronic display, a graphical image.

In addition to one or more of the features described above, or as an alternative, further embodiments of the method may include that the graphical image is a humanoid figure.

In addition to one or more of the features described above, or as an alternative, further embodiments of the method may include providing the elevator command to a controller of the elevator system.

In addition to one or more of the features described above, or as an alternative, further embodiments of the method may include that wherein the receiving the statement command from the user further includes detecting, by a second sensor, an audio statement command from the user and confirming the at least one statement command based at least in part on comparing the at least one statement command to the audio statement command.

In addition to one or more of the features described above, or as an alternative, further embodiments of the method may include that wherein the prompting the user for the statement command for the elevator system is performed by a mobile display device, and wherein the mobile display device is an anthropomorphic figure.

In addition to one or more of the features described above, or as an alternative, further embodiments of the method may include based at least in part on the sensor being unable to capture the series of images of the user: extracting one or more audio keywords from the audio statement command and determining an elevator command based on the one or more extracted audio keywords.

According to another embodiment, a system is provided. The system includes at least one processor and memory having instructions stored thereon that, when executed by the at least one processor, cause the processor to receive a statement command from a user, wherein the receiving the statement command from the user includes capturing, by a sensor, a series of frames of the user, wherein the series of frames includes lip movements of the user, and determine at least one statement command from the user based on the lip movements of the user. One or more keywords are extracted from the statement command. An elevator command is determined based on the one or more extracted keywords.

In addition to one or more of the features described above, or as an alternative, further embodiments of the system may include detecting a presence of the user at a location and prompting the user for the statement command for the elevator system, based at least in part on the detecting the presence of the user at the location.

In addition to one or more of the features described above, or as an alternative, further embodiments of the system may include wherein the determining an elevator command based on the one or more extracted keywords includes comparing the one or more keywords to an elevator command database to determine that at least one of the one or more keywords is recognized, and selecting the elevator command from the elevator command database.

In addition to one or more of the features described above, or as an alternative, further embodiments of the system may include the processor further configured to: present the elevator command to the user and receive an indication from the user.

In addition to one or more of the features described above, or as an alternative, further embodiments of the system may include that the indication from the user is a confirmation of the elevator command and that the processor is further configured to provide the elevator command to a controller of the elevator system.

According to another embodiment, a computer program product is provided. The computer program product includes a non-transitory computer readable storage medium having program instructions embodied therewith, the program instructions executable by a processor to cause the processor to perform a method including receiving a statement command from a user, wherein the receiving the statement command from the user includes capturing, by a sensor, a series of frames of the user, wherein the series of frames includes lip movements of the user, and determining at least one statement command from the user based on the lip movements of the user. The statement command is received from the user and one or more keywords are extracted from the statement command. An elevator command is determined based at least in part on the one or more keywords.

In addition to one or more of the features described above, or as an alternative, further embodiments of the computer program product may include detecting a presence of the user at a location and prompting the user for the statement command for the elevator system, based at least in part on the detecting the presence of the user at the location.

In addition to one or more of the features described above, or as an alternative, further embodiments of the computer program product may include wherein the determining an elevator command based on the one or more extracted keywords includes comparing the one or more keywords to an elevator command database to determine that at least one of the one or more keywords is recognized and selecting the elevator command from the elevator command database.

In addition to one or more of the features described above, or as an alternative, further embodiments of the computer program product may include presenting the elevator command to the user and receiving an indication from the user. The indication from the user is a confirmation of the elevator command and further including providing the elevator command to a controller of the elevator system.

Technical effects of embodiments of the present disclosure include prompting a user of an elevator system for a voice command that is passed along to an elevator control system. The voice command is elicited from the user utilizing techniques such as a humanoid figure on a display screen that prompts the user for a command. A nearby sensor looks at the lip movements of the user to identify a statement made by the user. The statement is analyzed and keywords are extracted and compared to a database. Once the keywords are recognized, feedback is provided to the user and the command is passed along to the elevator control system.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system that may employ various embodiments of the disclosure;
FIG. 2 is a schematic block diagram illustrating a computing system that may be configured in accordance with one or more embodiments of the present disclosure;
FIG. 3 illustrates a schematic block diagram of a system configured in accordance with an embodiment of the present disclosure;
FIG. 4 illustrates a block diagram of a display for a spoken command interface in accordance with one or more embodiments of the present disclosure; and
FIG. 5 illustrates a flow process for spoken command interface for an elevator system in accordance with an embodiment of the present disclosure.

### DETAILED DESCRIPTION

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in FIG. X may be labeled "Xa" and a similar feature in FIG. Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

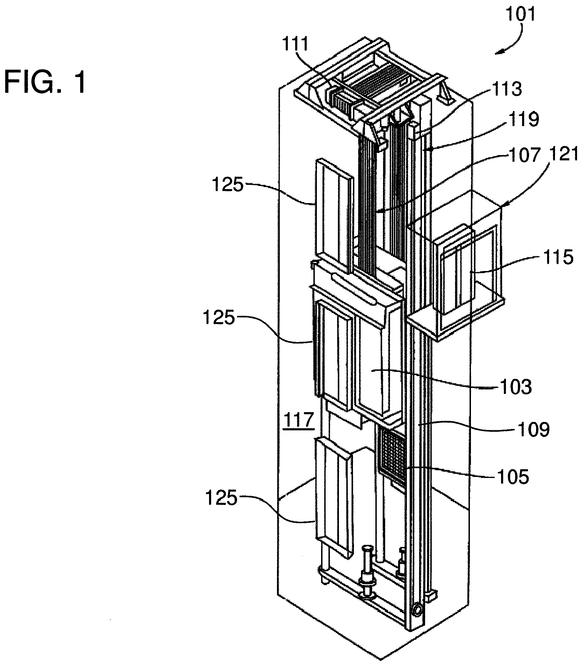

FIG. 1 is a perspective view of an elevator system 101 including an elevator car 103, a counterweight 105, a roping 107, a guide rail 109, a machine 111, a position encoder 113, and a controller 115. The elevator car 103 and counterweight 105 are connected to each other by the roping 107. The roping 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The roping 107 engages the machine 111, which is part of an overhead structure of the elevator system 101. The machine 111 is configured to control movement between the elevator car 103 and the counterweight 105. The position encoder 113 may be mounted on an upper sheave of a speed-governor system 119 and may be configured to provide position signals related to a position of the elevator car 103 within the elevator shaft 117. In other embodiments, the position encoder 113 may be directly mounted to a moving component of the machine 111, or may be located in other positions and/or configurations as known in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position encoder 113. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor.

Although shown and described with a roping system, elevator systems that employ other methods and mechanisms of moving an elevator car within an elevator shaft, such as hydraulic and/or ropeless elevators, may employ embodiments of the present disclosure. FIG. 1 is merely a non-limiting example presented for illustrative and explanatory purposes.

Embodiments provided herein are directed to methods, systems, and computer program products for a spoken command interface primarily based on non-audio detection means. Elevator systems typically require a user to physically interact with elevator controls to operate the elevator. Some elevator systems utilize voice based interfaces that receive audio input from a user to operate the elevator. These voice based interfaces on an elevator system may encounter difficulty due to the presence of other people on an elevator or at an elevator lobby who may be speaking, the presence of ambient noise, noise caused by movement of people in the elevator or at an elevator lobby, and reverberation caused by the local environment. A spoken command interface primarily based on non-audio detection means may create a more robust system by utilizing a lip reading interface to determine a command expressed by a user of the elevator system. Benefits include the ability to receive elevator commands without the need for audio signal processing to filter out ambient noise or environmental noise. Additionally, the lip reading interface includes feedback delivered to the user to confirm a command or to alert the user that a command was not recognized.

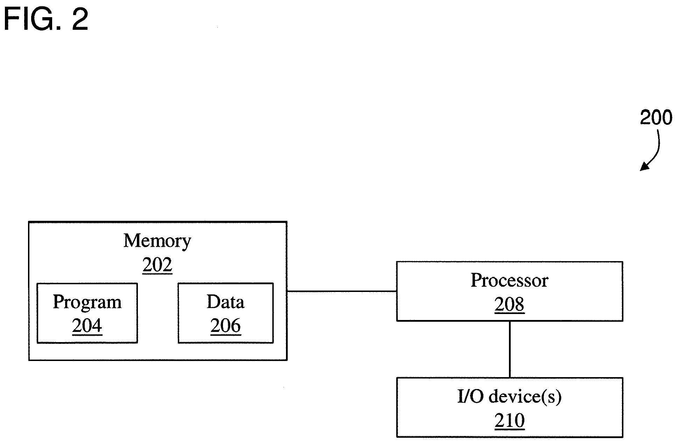

Referring now to FIG. 2, a computing system 200 is shown. The computing system 200 may be configured as part of and/or in communication with an elevator controller, e.g., controller 115 shown in FIG. 1. The system includes a memory 202 which may store executable instructions and/or data. The executable instructions may be stored or organized in any manner and at any level of abstraction, such as in connection with one or more applications, processes, routines, procedures, methods, etc. As an example, at least a portion of the instructions are shown in FIG. 2 as being associated with a program 204.

Further, as noted, the memory 202 may store data 206. The data 206 may include profile or registration data, elevator car data, a device identifier, or any other type(s) of data. The instructions stored in the memory 202 may be executed by one or more processors, such as a processor 208. The processor 208 may be operative on the data 206.

The processor 208 may be coupled to one or more input/output (I/O) devices 210. In some embodiments, the I/O device(s) 210 includes one or more of a keyboard or keypad, a touchscreen or touch panel, a display screen, a microphone, a speaker, one or more image, video, or depth sensors, a mouse, a button, a remote control, a joystick, a printer, a telephone or mobile device (e.g., a smartphone), a sensor, etc. The I/O device(s) 210 can be configured to provide an interface to allow a user to interact with the computing system 200. For example, the I/O device(s) can support a graphical user interface (GUI) and/or a video sensor operable to capture frames of users of an elevator system.

While I/O device(s) 201 are predominately taught with respect to an optical image or video from a visible spectrum camera, it is contemplated that a depth sensor may be used. Various 3D depth sensing sensor technologies and devices that can be used in I/O device(s) 201 include, but are not limited to, a structured light measurement, phase shift measurement, time of flight measurement, stereo triangulation device, sheet of light triangulation device, light field cameras, coded aperture cameras, computational imaging techniques, simultaneous localization and mapping (SLAM), imaging radar, imaging sonar, echolocation, laser radar, scanning light detection and ranging (LIDAR), flash LIDAR, or a combination comprising at least one of the foregoing. Different technologies can include active (transmitting and receiving a signal) or passive (only receiving a signal) and may operate in a band of the electromagnetic or acoustic spectrum such as visual, infrared, ultrasonic, etc. In various embodiments, a depth sensor may be operable to produce depth from defocus, a focal stack of images, or structure from motion.

The components of the computing system 200 can be operably and/or communicably connected by one or more buses. The computing system 200 can further include other features or components as known in the art. For example, the computing system 200 can include one or more transceivers and/or devices configured to receive information or data from sources external to the computing system 200. For example, in some embodiments, the computing system 200 can be configured to receive information over a network (wired or wireless). The information received over a network may be stored in the memory 202 (e.g. as data 206) and/or may be processed and/or employed by one or more programs or applications (e.g., program 204).

The computing system 200 can be used to execute or perform embodiments and/or processes described herein. For example, the computing system 200, when configured as part of an elevator control system, can be used to receive commands and/or instructions, and can further be configured to control operation of and/or reservation of elevator cars within one or more elevator shafts.

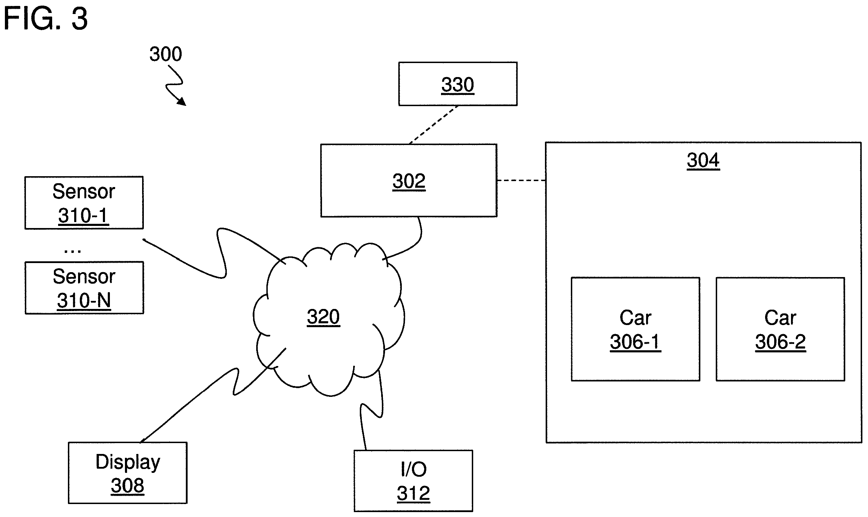

Referring to FIG. 3, a block diagram of an elevator control system for a spoken command interface primarily based on non-audio detection means in accordance with one or more embodiments is depicted. The system 300 includes a controller 302 for performing the elevator control functions described herein. The system 300 also includes an elevator 304 with two cars 306-1, 306-2. In one or more embodiments, the controller 302 can be implemented on the processing system found in FIG. 2. The controller 302 can be housed within the elevator 304 or can be housed separate from the elevator 304.

The controller 302 is operable to control the functioning of an elevator system such as elevator 304. The elevator 304 includes two cars 306-1 and 306-2. The controller 302 can provide elevator commands to control the functioning of the elevator cars 306-1 and 306-2. For example, a request from a user can be received on a floor level and the controller 302 utilizing elevator control logic can send either car 306-1 or car 306-2 to the calling floor level in response to the request. Also the controller 302 is communicatively coupled to one or more sensors 310-1 ... 310-N (where N is any integer greater than 1). The one or more sensors 310-1 ... 310-N can be directly connected to the controller 302 or can be connected through a network 320. The network 320 may be any type of known network including, but not limited to, a wide area network (WAN), a local area network (LAN), a global network (e.g. Internet), a virtual private network (VPN), a cloud network, and an intranet. The network 320 may be implemented using a wireless network or any kind of physical network implementation known in the art.

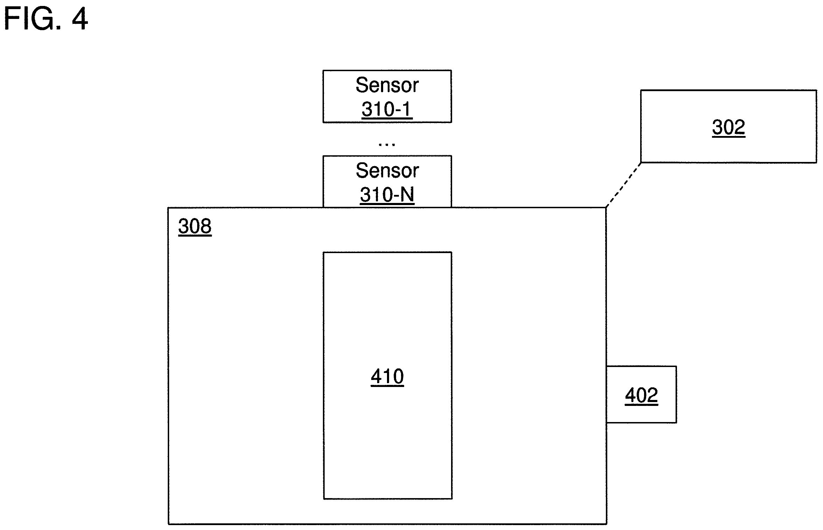

In one or more embodiments, the system 300 can be employed for an elevator 304 in a lobby of a building, for example. A user can enter the lobby to use the elevator 304. When entering the lobby, the one or more sensors 310-1 ... 310-N can detect the presence of the user. For example, a motion sensor or other type of detecting sensor can be utilized to determine if a user has entered an area, such as the elevator lobby. The motion sensor communicates with the controller 302. The controller 302 can activate the display 308 to present a graphical image (see FIG. 4). The user interacts with the display 308 to invoke an elevator command. The user interaction includes the user speaking a verbal command to the display 308. To determine what the user is verbally communicating, the one or more sensors 310-1 ... 310-N can include one or more sensors such as, for example, image, video, or depth sensors. The image, video, or depth sensors can be arranged to be facing a user while the user is facing the display 308. While the user is verbally communicating a statement command, the image, video, or depth sensors will capture a series of frames of the user and send to the controller 302. The controller 302 will analyze the series of frames to determine the verbal command statement from the user by analyzing the lip movement of the user. In one or more embodiments, the image, video, or depth sensors can be arranged within the elevator lobby or any other space to capture a user's face while the user is facing any direction in the elevator lobby or within the elevator car.

In one or mode embodiments the one or more sensors 310-1 ... 310-N may be placed at a distance from controller 302 and/or the display 308 provided that the placement and design of the one or more sensors 310-1 ... 310-N allows determination of the verbal statement of the user.

In one or more embodiments, the display 308 is arranged to attract the user's attention after the user enters an area, such as an elevator lobby. For example, the user enters and the display 308 presents a humanoid figure that asks the user, "What floor would you like to go to, today?" In another embodiment, the display 308 may be further designed as an anthropomorphic figure and can be capable of movement. For example, the anthropomorphic figure can be a robot, android, or the like. Based on the user being verbally asked for a floor command, the user will respond verbally back to the display 308. One or more image, video, or depth sensors can be arranged around the display to be facing the user while the user is communicating a verbal statement. While the user is speaking, the image, video, or depth sensors capture frames of the user's face and send the frames to the controller 302. Based on the user's lip movements, a statement command can be determined by the controller 302. The statement command may not be in a format that is compatible with the controller 302 to invoke an elevator command. For example, a user may say, "I would like to go to floor four, please." The controller 302 analyzes this full statement and extracts one or more keywords. In the above example, keywords to be extracted could be "floor" and "four." The controller 302 can then determine an appropriate elevator command by, for instance, comparing these keywords to an elevator command database 330. In alternative embodiments controller 302 can determine an elevator command by methods of keyword-based intent inference such as rule-based inference, probabilistic programming, Markov Logic Networks, and the like. The controller 302 can provide feedback to the user through the display 308. For example, if the keywords are recognized and an elevator command can be invoked, the display 308 may show a confirmation of the command to the user. For example, the display 308 might state, "Are you going to the fourth floor?" The user can confirm this command by saying "Yes" or even pressing a confirmation input through an I/O device 312. The feedback for the confirmation of the command statement may be in the form of an audio or visual signal to the user such as, for example, audible chime, a spoken response, a visual color, or message displayed on the display 308. The user confirmation will cause the elevator command to be executed. In the example, the user will be taken to the fourth floor.

In another example, a user might state, "I would like to go to Dr. Burdell's office." In this example, the keywords extracted could be "Dr. Burdell" and "Office." The controller 302 would compare these keywords to the elevator command database 330 to determine the floor location of Dr. Burdell's office. Once the floor location is determined, the elevator command can be invoked to call an elevator to the user's location and deliver the user to the proper floor.

The one or more sensors 310-1 ... 310-N can include an audio sensor such as a microphone. The microphone can be utilized to detect when a user starts speaking and when the user finishes speaking. The controller 302 can use this detection to control the image, video, or depth sensor to begin capturing frames of the user and when the user is no longer speaking, the image, video, or depth sensor can stop capturing frames. Control logic can be utilized to account for any long pauses in a user's command statement or any other extraneous noises so that only the user's statement command for the elevator is captured by the image, video, or depth sensor(s).

The controller 302 can utilize a learning model to update the elevator command database 330 with terms and keywords for later usage. For example, a user might state, "I'd like to go to the top." Keywords such as a floor or a number are not included in this statement command. The controller 302, through the display 308, might provide feedback indicating that the command was not recognized. If the user rephrases and states, "I'd like to go to the 40^{th} floor," the controller 302 can associate the keyword "top" with a command for going to the "40^{th} floor" and update the elevator command database 330. Similarly, in alternative embodiments, the probabilities or parameters of a keyword-based inference system may be updated by, for instance, assigning a probability of one to the relationship of "top" to "40^{th} floor".

Referring to FIG. 4, a block diagram of a display screen for a spoken command interface in accordance with one or more embodiments is depicted. The display 308 is configured to display a graphical image 410. The display 308 includes an audio speaker 402. The graphical image 410 on the display 308 can be any type of image that is suitable to draw the attention of a user of an elevator system. For example, the graphical image 410 can be a humanoid figure that can provide information or elicit information from a user of the elevator system. The humanoid figure can be configured to ask a question to an elevator user as described above to elicit a statement command for operation of the elevator system.

Arranged around the display 308 are the one or more sensors 310-1 ... 310-N. As described above, the one or more sensors 310-1 ... 310-N can be a combination of motion detection sensors, audio detection sensors, and visual or 3D sensors. The motion detection sensor can be positioned to detect the presence of a user of the elevator system when the user enters an area around the display 308 or around the elevators. Once detected, the display 308 presents a graphical image 410 designed to attract the attention of the user. The graphical image 410 can be a humanoid figure or a person. The display 308 has an audio speaker 402 that can communicate an audio directive to the user such as, for example, a question as to what floor the user is going. The graphical image 410 causes the user to look at the display 308 and the user will respond to the audio directive with a verbal statement command. With the user looking at the display, one or more image, video, or depth sensors are arranged by the display 308 so that the image, video, or depth sensors are facing the user and able to capture frames of the user's face and lip movements. The audio detection sensor (e.g., microphone) can determine when a user starts to speak and when they stop speaking.

In another embodiment, the audio detection sensor can be utilized to confirm a command statement made by a user. For example, if part of the user's face is obscured for portions of the command statement being input, the audio sensor can utilize speech recognition to fill in any gaps in the command statement that may not be received by the image, video, or depth sensors. In another embodiment, any audio statement made by a user can be utilized to confirm and/or override command statements received by the image, video, or depth sensors. Further, audio speech recognition may be used contemporaneously with lip reading and the results fused for higher recognition accuracy. The fusion may be accomplished by data fusion methods including deep neural networks, convolutional neural networks, recursive neural networks, dictionary learning, bag of visual/depth word techniques, Support Vector Machine (SVM), Decision Trees, Decision Forests, Fuzzy Logic, Markov Model techniques, Hidden Markov Models (HMM), Markov Decision Processes (MDP), Partially Observable MDPs, Markov Decision Logic, Probabilistic Programming, Bayesian inference, and the like.

In one or more embodiments, the one or more sensors 310-1 ... 310-N can include an image, video, or depth sensor. The image, video, or depth sensor can be affixed to the display 308 so that a user's face can be captured while interacting with the display 308. In the illustrated example, the image, video, or depth sensor is affixed to the top of the display 308. However, in one or more embodiments, the image, video, or depth sensor can be located anywhere proximate to the display 308 such as, for example, embedded in the display 308 housing, affixed to the side or bottom of the display screen, and the like. The image, video, or depth sensor location can be set in a location suitable to capture image and/or frame data from a user.

In some embodiments, the statement command from the user may specify a type of service requested, at any level of detail or abstraction. For example, a first statement command may specify that elevator service is requested, a second statement command may specify one or more of a departure floor and/or a destination floor, and a third statement command may specify that elevator service is desired to accommodate a heavy load (e.g., freight or cargo) with a number of other users or passengers.

In some embodiments, the display 308 can be a user device such as a smart phone with a built in image, video, or depth sensor. The user can interact with the smart phone to request service and while facing the image, video, or depth sensor, the frames of the user's face can be captured and sent to the controller 302 to extract keywords for the elevator command. The location based services in the smart phone may activate the prompting for an elevator statement command from the user.

In some embodiments, the one or more sensors 310-1 ... 310-N can be positioned through a building to train the controller 302 to maintain the association of a recognized command, spoken language, idiosyncratic lip movement, etc. with the user for better interpretation of subsequent statement commands.

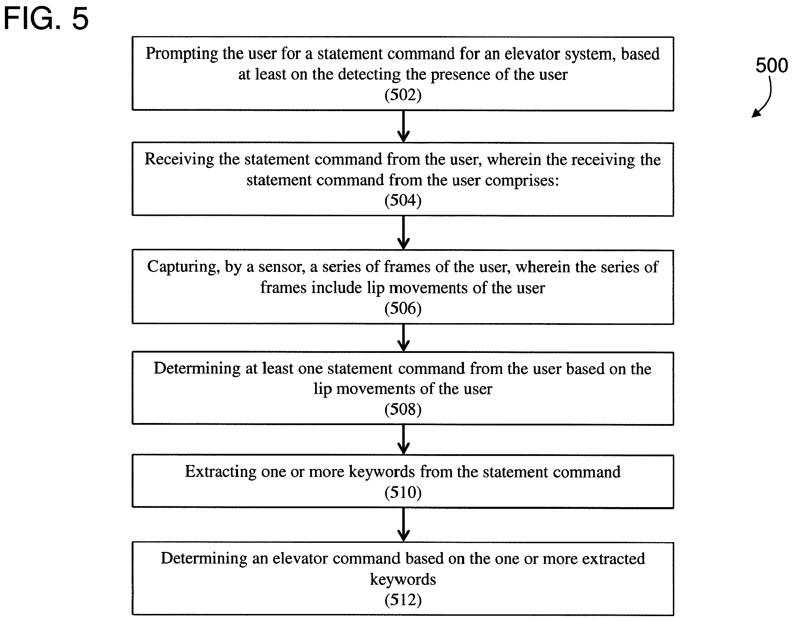

Referring now to FIG. 5, a flow process of a method 500 is shown that may be used in connection with one or more entities, devices, or systems, such as those described herein. The process 500 may be used to recognize a request and receive confirmation from a user.

In block 502, a presence of user at a location can be detected and the user is prompted for a statement command for an elevator system, based at least on the detecting the presence of the user. The detection of the user can be done by any means such as, for example, the usage of a motion detection sensor near the elevator system, use of the image video, or depth sensor to detect presence of motion, use of the audio detection sensor (e.g., microphone), or use of any other desired sensor.

As described above, the presence of the user causes a display 308 to present a graphical image 410 to the user for the user to interact with. Verbal cues from the graphical image 410 will cause the user to respond verbally to control the elevator. In block 504, a statement command is received from the user.

In block 506, a sensor captures a series of frames of the user. This series of frames includes lip movement of the user. In block 508, at least one statement command is determined based on the lip movement of the user.

In block 510, one or more keywords are extracted from the statement command. A user might provide a statement command with extraneous information not directly related to an elevator command. Keywords that may be related to an elevator command are extracted in block 510, and an elevator command is determined from the one or more keywords in block 512.

The flow process 500 is illustrative. In some embodiments, one or more of the blocks or operations (or portions thereof) may be optional. In some embodiments, additional operations not shown may be included. In some embodiments, the operations may execute in an order or sequence different from what is shown. In some embodiments, a user of a mobile wireless programmable device may request a service within or outside of a building or facility.

As described herein, in some embodiments various functions or acts may take place at a given location and/or in connection with the operation of one or more apparatuses, systems, or devices. For example, in some embodiments, a portion of a given function or act may be performed at a first device or location, and the remainder of the function or act may be performed at one or more additional devices or locations.

Embodiments may be implemented using one or more technologies. In some embodiments, an apparatus or system may include one or more processors, and memory storing instructions that, when executed by the one or more processors, cause the apparatus or system to perform one or more methodological acts as described herein. Various mechanical components known to those of skill in the art may be used in some embodiments.

Embodiments may be implemented as one or more apparatuses, systems, and/or methods. In some embodiments, instructions may be stored on one or more computer program products or computer-readable media, such as a transitory and/or non-transitory computer-readable medium. The instructions, when executed, may cause an entity (e.g., an apparatus or system) to perform one or more methodological acts as described herein.

Aspects of the disclosure have been described in terms of illustrative embodiments thereof. Numerous other embodiments, modifications and variations within the scope and spirit of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional.

## Claims

1. A method comprising:
receiving a statement command from a user, wherein the receiving the statement command from the user comprises:
capturing, by a sensor, a series of frames of the user, wherein the series of frames include lip movements of the user; and
determining at least one statement command from the user based on the lip movements of the user;
extracting one or more keywords from the statement command;
determining an elevator command based on the one or more extracted keywords.

2. The method of claim 1 further comprising:
detecting a presence of the user at a location; and
prompting the user for the statement command for the elevator system, based at least in part on the detecting the presence of the user at the location.

3. The method of claim 1 or 2, wherein the determining an elevator command based on the one or more extract keywords includes comparing the one or more keywords to an elevator command database to determine that at least one of the one or more keywords is recognized; and
selecting the elevator command from the elevator command database.
determining an elevator command from an elevator command database based at least in part on the one or more keywords.

4. The method of any of the preceding claims further comprising:
presenting the elevator command to the user; and
receiving an indication from the user.

5. The method of claim 4, wherein the indication from the user is a confirmation of the elevator command; and further comprising providing the elevator command to a controller of the elevator system.

6. The method of claim 4, wherein the indication from the user is a rejection of the elevator command; and further comprising prompting the user for a statement command for the elevator system, wherein the prompting the user for a statement command for the elevator system in particular comprises providing one or more example statement commands to the user.

7. The method of claim 2,
wherein the prompting the user for the statement command for the elevator system comprises displaying, on an electronic display, a graphical image, wherein the graphical image in particular is a humanoid figure, or
wherein the prompting the user for the statement command for the elevator system is performed by a mobile display device, and wherein the mobile display device is an anthropomorphic figure.

8. The method of any of the preceding claims further comprising providing the elevator command to a controller of the elevator system.

9. The method of any of the preceding claims, wherein the receiving the statement command from the user further comprises:
detecting, by a second sensor, an audio statement command from the user; and
confirming the at least one statement command based at least in part on comparing the at least one statement command to the audio statement command.

10. The method of any of the preceding claims further comprising:
based at least in part on the sensor being unable to capture the series of images of the user:
extracting one or more audio keywords from the audio statement command; and
determining an elevator command based on the one or more extracted audio keywords.

11. A system comprising:
at least one processor; and
memory having instructions stored thereon that, when executed by the at least one processor, cause the processor to:
receive a statement command from the user, wherein the receiving the statement command from the user comprises:
capturing, by a sensor, a series of frames of the user, wherein the series of frames include lip movements of the user; and
determining at least one spoken statement command based on the lip movements of the user; and
extract one or more keywords from the statement command;
determine an elevator command based on the one or more extracted keywords.

12. The system of claim 11, wherein the processor is further configured to:
detect a presence of a user at a location;
prompt the user for the statement command for the elevator system, based at least in part on the detecting the presence of the user at the location.

13. The system of claim 11 or 12, wherein the determining an elevator command based on the one or more extract keywords includes comparing the one or more keywords to an elevator command database to determine that at least one of the one or more keywords is recognized; and
selecting the elevator command from the elevator command database.

14. The system of any of claims 11 to 13, wherein the processor is further configured to:
present the elevator command to the user; and
receive an indication from the user, wherein the indication from the user is a confirmation of the elevator command; and wherein the processor is further configured to provide the elevator command to a controller of the elevator system.

15. A computer program product comprising:
a non-transitory computer readable storage medium having program instructions embodied therewith, the program instructions executable by a processor to cause the processor to perform a method comprising:
receiving the statement command from the user, wherein the receiving the statement command from the user comprises:
capturing, by a sensor, a series of frames of the user, wherein the series of frames include lip movements of the user; and
determining at least one spoken statement command based on the lip movements of the user;
extracting one or more keywords from the statement command;
determining an elevator command from an elevator command database based at least in part on the one or more keywords.
